# EUROPÄISCHE PATENTSCHRIFT

(11) **EP 4 396 008 B1**
(45) Veröffentlichungstag und Bekanntmachung des Hinweises auf die Patenterteilung: **04.03.2026**
(21) Anmeldenummer: 22751281.1
(22) Anmeldetag: 26.07.2022
(51) Int. Cl.: B60C 11/00, B60C 1/00

(54) **MEHRLAGIGER LAUFSTREIFEN FÜR DEN EINSATZ IN FAHRZEUGREIFEN**
MULTI-LAYER TREAD FOR USE IN VEHICLE TYRES
BANDE DE ROULEMENT MULTICOUCHE DESTINÉE À ÊTRE UTILISÉE DANS DES PNEUS DE VÉHICULE

(30) Priorität: 01.09.2021 DE 102021209583
(43) Veröffentlichungstag der Anmeldung: 10.07.2024
(73) Patentinhaber: Continental Reifen Deutschland GmbH, 30175 Hannover (DE)
(72) Erfinder: RÖMER, Justus, 30175 Hannover (DE); MISIR, Ömür, 30175 Hannover (DE)
(74) Vertreter: Continental Corporation
(86) Internationale Anmeldenummer: PCT/DE2022/200166
(87) Internationale Veröffentlichungsnummer: WO 2023/030586

(56) Entgegenhaltungen:
- US-A1- 2018 154 696
- US-A1- 2021 046 783
- US-A1- 2021 046 785
- US-A1- 2021 213 784
- US-B2- 8 944 124

## Beschreibung

Die Erfindung betrifft einen mehrlagigen Laufstreifen für den Einsatz in Fahrzeugreifen, eine Verwendung entsprechender mehrlagiger Laufstreifen als Laufstreifen für Fahrzeugreifen sowie einen entsprechenden Fahrzeugreifen, umfassend den entsprechenden mehrlagigen Laufstreifen. Offenbart wird zudem ein Verfahren zur Herstellung entsprechender mehrlagiger Laufstreifen und ein darauf aufbauendes Verfahren zur Herstellung von Fahrzeugreifen.

Der Gegenstand der Erfindung ist in den beigefügten Ansprüchen definiert.

An die Eigenschaften und Leistungscharakteristika moderner Fahrzeugluftreifen werden stetig steigende Anforderungen gestellt, insbesondere beim Einsatz in Hochleistungsbereichen. Eine wichtige Hochleistungsanwendung ist hierbei der Einsatz als Sportreifen, für die ein Fahrzeugreifen besonders gute Rolleigenschaften aufweisen muss. Einen wesentlichen Beitrag zu der Einstellung der Fahreigenschaften liefert bei modernen Fahrzeugluftreifen der Laufstreifen. Der Laufstreifen ist der Teil des Fahrzeugreifens, der mit der Straße in Kontakt steht und dessen Eigenschaften maßgeblich mitbestimmend für das Verhalten des Fahrzeugluftreifens sind.

Insbesondere im Bereich der Sportreifen wurden in der Vergangenheit neue Konzepte für leistungsfähigere Laufstreifen entwickelt, welche auf eine Laufstreifenkonstruktion zurückgreifen, die aus mehreren Teilen, insbesondere unterschiedlichen Gummiwerkstoffen, zusammengesetzt ist (auch als "MCT"-Konzepte bezeichnet). Für Sportreifen gibt es hierbei insbesondere den Ansatz, für den Laufstreifen im Schulterbereich des Fahrzeugreifens eine härtere Schulter vorzusehen. Die erfolgt dadurch, dass in dem für die Schulter vorgesehen Bereich des Laufstreifens ein Gummiwerkstoff eingesetzt wird, welcher über einen hohen E-Modul verfügt. Hierdurch ist es möglich, die Quersteifigkeit des Profils und damit die Rolleigenschaften zu verbessern. Der Einsatz einer solchen Gummimischung in den Schulterbereichen geht jedoch meist mit einer Erhöhung des Rollwiderstandes einher. Dies wird regelmäßig als nachteilig angesehen, auch und gerade wegen des Einflusses auf den Energieverbrauch.

Für sparsame, rollwiderstandsoptimierte Reifen wäre es eher wünschenswert, die Laufstreifen im Schulterbereich der Fahrzeugreifen mit weicheren, d. h. rollwiderstandsärmeren, Gummiwerkstoffen zu versehen, welche einen niedrigeren E-Modul aufweisen. Insoweit besteht auch bei der Verwendung von mehrkomponentigen Laufstreifen ein Zielkonflikt zwischen einer optimierten Quersteifigkeit des Profils, welches für die Handhabungseigenschaften maßgeblich ist, und des mit diesem Laufstreifen zu erzielenden Rollwiderstandes.

Laufstreifen für Fahrzeugreifen sind in der US 2018154696 A1, US 2021046783 A1, US 2021046785 A1, US 2021213784 A1 und US 8944124 B2 offenbart.

Die primäre Aufgabe der vorliegenden Erfindung war es, die aus dem Stand der Technik bekannten Nachteile auszuräumen oder zumindest zu verringern.

Insoweit war es insbesondere die Aufgabe der vorliegenden Erfindung, den vorstehend beschriebenen Zielkonflikt zwischen einer optimalen Quersteifigkeit und einem möglichst niedrigen Rollwiderstand bestmöglich zu lösen.

Es war somit die Aufgabe der vorliegenden Erfindung, einen Laufstreifen anzugeben, welcher über eine ausgezeichnete Quersteifigkeit verfügt und gleichzeitig möglichst rollwiderstandsarm ist.

Hierbei war es wünschenswert, dass der anzugebende Laufstreifen möglichst einfach herstellbar sein sollte und idealerweise unter Verwendung von in der Reifenfertigung üblichen Materialien herstellbar sein sollte.

Insbesondere sollte der anzugebende Laufstreifen jedoch über ausgezeichnete Eigenschaften bei Kurvenfahrten verfügen.

Die Erfinder der vorliegenden Erfindung haben nunmehr erkannt, dass sich die vorstehend beschriebenen Aufgaben überraschenderweise lösen lassen, wenn ein mehrlagiger Laufstreifen bereitgestellt wird, wie er in den Ansprüchen definiert ist. Insbesondere haben die Erfinder erkannt, dass die vorstehend beschriebenen Aufgaben gelöst werden können, wenn eine für den Kontakt mit der Straße vorgesehene Decklage aus zumindest drei Teilbereichen hergestellt wird, wobei in den Seitenbereichen, die im späteren Reifen in den Schulterbereichen angeordnet sind, rollwiderstandsarme Gummiwerkstoffe mit einem niedrigen E-Modul eingesetzt werden, die zwischen einander einen Mittelbereich der Decklage des Laufstreifens einschließen, welcher aus einer Gummimischung mit höherem E-Modul ausgebildet wird, sofern diese Decklage auf der Unterseite anschließend durch eine relativ harte und steife Grundlage mit einem hohen E-Modul stabilisiert wird.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verwendungen, Fahrzeugreifen und Verfahren ergeben sich aus den Merkmalen bevorzugter mehrlagiger Fahrzeugreifen.

Die Erfindung betrifft einen mehrlagigen Laufstreifen für den Einsatz in Fahrzeugreifen, umfassend:
a) eine Grundlage, umfassend einen ersten Gummiwerkstoff, und
b) eine auf der Grundlage angeordnete und mit der Grundlage verbundene Decklage,
wobei die Decklage umfasst:
i) einen ersten Seitenbereich, umfassend einen zweiten Gummiwerkstoff,
ii) einen zweiten Seitenbereich, umfassend einen dritten Gummiwerkstoff, und
iii) einen zwischen dem ersten Seitenbereich und dem zweiten Seitenbereich angeordneten Mittelbereich, umfassend einen vierten Gummiwerkstoff,
wobei der erste Gummiwerkstoff einen höheren E-Modul aufweist als der vierte Gummiwerkstoff, und wobei der vierte Gummiwerkstoff einen höheren E-Modul aufweist als der zweite Gummiwerkstoff und der dritte Gummiwerkstoff.

Der erfindungsgemäße mehrlagige Laufstreifen ist für den Einsatz in Fahrzeugreifen geeignet und dafür vorgesehen. In Übereinstimmung mit dem fachmännischen Verständnis kann ein entsprechender mehrlagiger Laufstreifen separat hergestellt (beispielsweise für den Einsatz in der Runderneuerung von Reifen) oder im Zuge der Reifenherstellung zusammen mit anderen Komponenten eines Fahrzeugreifens ausgeformt werden.

Der erfindungsgemäße mehrlagige Laufstreifen umfasst eine erste Lage, die als Grundlage bezeichnet wird. Diese Grundlage umfasst einen ersten Gummiwerkstoff. Auf dieser Grundlage angeordnet ist eine Decklage, welche mit der Grundlage verbunden ist, sodass ein mehrlagiger Verbund erhalten wird. Die Decklage umfasst mehrere unterschiedliche Bereich, nämlich zwei Seitenbereiche und einen zwischen diesen Seitenbereichen angeordneten Mittelbereich. Während der Mittelbereich einen vierten Gummiwerkstoff umfasst, umfassen der erste und der zweite Seitenbereich einen zweiten bzw. einen dritten Gummiwerkstoff.

In dem erfindungsgemäßen mehrlagigen Laufstreifen weisen die eingesetzten Gummiwerkstoffe E-Module auf, die in einem spezifischen Verhältnis zueinander stehen. So weist der erste Gummiwerkstoff den höchsten E-Modul auf, wohingegen der zweite bzw. der dritte Gummiwerkstoff, d. h. die in den Seitenbereichen eingesetzten Gummiwerkstoffe, einen niedrigeren E-Modul aufweisen als der im Mittelbereich eingesetzte vierte Gummiwerkstoff. Hierdurch wird ein spezifischer mehrlagiger Aufbau mit einer mehrkomponentigen Decklage erhalten, welcher überraschenderweise zu exzellenten Handhabungseigenschaften bei gleichzeitig vorteilhaftem Rollwiderstand führt.

Ohne an diese Theorie gebunden sein zu wollen, gehen die Erfinder der vorliegenden Erfindung davon aus, dass es die Kombination der hochmoduligen Grundlage mit der aus mehreren Teilbereichen mit unterschiedlichem E-Modul zusammengesetzten Decklage ist, die zu diesem vorteilhaften Effekt führt. Dabei nehmen die Erfinder an, dass der spezifische Aufbau der Decklage, die einen komplexen unsteten Verlauf des E-Moduls quer zur Laufrichtung aufweist, und die Stabilisierung der weichen Seitenbereiche durch die steife Grundlage, zu den ausgezeichneten Eigenschaften des erfindungsgemäßen mehrlagigen Laufstreifens führen.

Der im Rahmen der vorliegenden Erfindung verwendete Ausdruck Gummiwerkstoff ist für den Fachmann im Bereich der Fertigung von Fahrzeugreifen klar und bezeichnet elastisch verformbare Kunststoffe, d. h. solche Kunststoffe, die sich bei Zug- und/oder Druckbelastung elastisch verformen können. Für den Fachmann ist klar, dass hierbei insbesondere solche Gummiwerkstoffe bevorzugt sind, bei denen es sich um Vulkanisate von Kautschukmischungen handelt, wie sie in der Reifenindustrie häufig zum Einsatz kommen. Bevorzugt ist somit auch ein erfindungsgemäßer mehrlagiger Laufstreifen, wobei der erste Gummiwerkstoff und/oder der zweite Gummiwerkstoff und/oder der dritte Gummiwerkstoff, und/oder der vierte Gummiwerkstoff, bevorzugt sämtliche Gummiwerkstoffe, herstellbar sind durch Vulkanisation von vulkanisierbaren Kautschukmischungen, wobei die vulkanisierbaren Kautschukmischungen bevorzugt zumindest einen Dienkautschuk und zumindest einen Füllstoff umfassen.

Im Rahmen der vorliegenden Erfindung bezeichnet der Ausdruck E-Modul den mittleren dynamischen Speichermodul E', welcher für Gummiwerkstoffe aus einer dynamisch-mechanischen Messung bei 55 °C gemäß DIN 53513:1990-03 ermittelt wird, wobei der mittlere dynamische Speichermodul E' der Mittelwert aus zwei Messungen bei 0,15 % Dehnung und 8 % Dehnung ist.

Auch wenn prinzipiell beliebige Aufbauten des mehrlagigen Laufstreifens denkbar sind, ist es sinnvoll, den mehrlagigen Laufstreifen bandförmig auszuführen, sodass dieser beispielsweise um die Karkasse eines Fahrzeugluftreifens gelegt werden kann. Regelmäßig wird ein separat hergestellter bandförmiger Laufstreifen in den Dimensionen in etwa der Oberfläche der Karkasse entsprechen, auf dieser aufgebracht werden soll. Alternativ kann der erfindungsgemäße mehrlagige Laufstreifen auch ringförmig sein, insbesondere, wenn er als Teil eines Fahrzeugreifens bei der Herstellung des Fahrzeugreifens ausgeformt wird. Bevorzugt ist entsprechend ein erfindungsgemäßer mehrlagiger Laufstreifen, wobei der mehrlagige Laufstreifen ring- oder bandförmig ist, wobei die Länge des bandförmigen Laufstreifens größer ist als die Breite des Laufstreifens.

In analoger Weise sind auch die Einzelkomponenten, d. h. die Grundlage und die Decklage bandförmig, bzw. ein zu einem Ring geformter Strang. Bevorzugt ist folglich ein erfindungsgemäßer mehrlagiger Laufstreifen, wobei die Grundlage ring- oder bandförmig ist, wobei die auf der Grundlage angeordnete Decklage ring- oder bandförmig ist, wobei bevorzugt sämtliche Bereiche der Decklage ring- oder bandförmig sind.

Grundsätzlich ist es möglich, neben den vorstehend definierten Lagen und Bereichen weitere Lagen als Teil des mehrlagigen Laufstreifens vorzusehen, oder weitere Bereiche der Decklage durch beispielsweise andere Gummiwerkstoffe auszubilden. Hierdurch können die Eigenschaften des erfindungsgemäßen mehrlagigen Laufstreifens vorteilhafterweise an die jeweiligen Erfordernisse angepasst werden. Es ist jedoch explizit bevorzugt, dass der mehrlagige Laufstreifen aus den zwei angegebenen Lagen besteht und die Decklage wiederum aus drei Bereichen besteht, wie sie vorstehend angegeben sind. Bevorzugt ist somit ein erfindungsgemäßer mehrlagiger Laufstreifen, wobei der mehrlagige Laufstreifen aus der Grundlage und der Decklage besteht, und/oder wobei die Decklage aus dem ersten Seitenbereich, dem zweiten Seitenbereich und dem Mittelbereich besteht.

Nach Einschätzung der Erfinder der vorliegenden Erfindung lassen sich die vorteilhaften Eigenschaften des mehrlagigen Laufstreifens zuverlässig realisieren, wenn die Verhältnisse der E-Module in der Weise eingestellt werden, wie sie vorstehend definiert sind. Im Rahmen der eigenen Entwicklung konnten die Erfinder jedoch besonders geeignete Größenrelationen der E-Module der verschiedenen Gummiwerkstoffe identifizieren, mit denen besonders günstige Eigenschaften erhalten werden können. Hierbei hat es sich als Vorteil der erfindungsgemäßen mehrlagigen Laufstreifen erwiesen, dass für den ersten und den zweiten Seitenbereich dabei auch der gleiche Gummiwerkstoff eingesetzt werden kann, was mit Blick auf die zur Herstellung benötigten Ausgangsmaterialien und den Herstellungsaufwand als besonders vorteilhaft gesehen werden kann.

Bevorzugt ist nämlich ein erfindungsgemäßer mehrlagiger Laufstreifen, wobei der Quotient des E-Modul des ersten Gummiwerkstoffs geteilt durch den E-Modul des vierten Gummiwerkstoffs im Bereich von 1,01 bis 1,2, bevorzugt im Bereich von 1,02 bis 1,15, besonders bevorzugt im Bereich von 1,03 bis 1,1, liegt. Bevorzugt ist zudem ein erfindungsgemäßer mehrlagiger Laufstreifen, wobei der Quotient des E-Modul des vierten Gummiwerkstoffs geteilt durch den E-Modul des zweiten Gummiwerkstoffs im Bereich von 1,1 bis 2,3, bevorzugt im Bereich von 1,3 bis 2,0, liegt, und/oder wobei der Quotient des E-Modul des vierten Gummiwerkstoffs geteilt durch den E-Modul des dritten Gummiwerkstoffs im Bereich von 1,1 bis 2,3, bevorzugt im Bereich von 1,3 bis 2,0, liegt. Bevorzugt ist ebenfalls ein erfindungsgemäßer mehrlagiger Laufstreifen, wobei der Quotient des E-Modul des zweiten Gummiwerkstoffs geteilt durch den E-Modul des dritten Gummiwerkstoffs im Bereich von 0,8 bis 1,2, bevorzugt im Bereich von 0,9 bis 1,1, besonders bevorzugt im Bereich von 0,95 bis 1,15, liegt. Bevorzugt ist insbesondere ein erfindungsgemäßer mehrlagiger Laufstreifen, wobei der zweite Gummiwerkstoff und der dritte Gummiwerkstoff der gleiche Gummiwerkstoff sind.

Mit den vorstehend definierten Relationen lassen sich vorteilhafterweise erfindungsgemäße mehrlagige Laufstreifen konzipieren, deren mittlerer E-Modul, d. h. der nach Masse gewichtete mittlere E-Modul sämtlicher Komponenten des mehrlagigen Laufstreifens, an die grundsätzlichen Erfordernisse der spezifischen Anwendungen angepasst werden kann. Hierdurch können beispielsweise inhärent härtere oder weichere Reifen bereitgestellte zustellen, ohne von der vorteilhaften erfindungsgemäßen Lehre abweichen zu müssen. Die Erfinder der vorliegenden Erfindung konnten jedoch auch absolute Wertebereiche für die jeweiligen E-Module identifizieren, mit denen nach Einschätzung der Erfinder mehrlagige Laufstreifen erhalten werden können, die beim Einsatz in Fahrzeugluftreifen, insbesondere Sportreifen, zu besonders guten Handhabungseigenschaften bei einem gleichzeitig guten Rollwiderstand führen. Bevorzugt ist nämlich ein erfindungsgemäßer mehrlagiger Laufstreifen, wobei der E-Modul des ersten Gummiwerkstoffs im Bereich von 12 bis 17 MPa, bevorzugt im Bereich von 13 bis 16 MPa, liegt, und/oder wobei der E-Modul des zweiten Gummiwerkstoffs im Bereich von 6 bis 11 MPa, bevorzugt im Bereich von 7 bis 10 MPa, liegt, und/oder wobei der E-Modul des dritten Gummiwerkstoffs im Bereich von 6 bis 11 MPa, bevorzugt im Bereich von 7 bis 10 MPa, liegt, und/oder wobei der E-Modul des vierten Gummiwerkstoffs im Bereich von 11 bis 16 MPa, bevorzugt im Bereich von 12 bis 15 MPa, liegt.

Für den Fachmann ist dabei ersichtlich, dass einer oder mehrere der vorstehend angegebenen Werte vorteilhafterweise mit den zuvor definierten Verhältnissen kombiniert werden sollten. Als ganz besonders vorteilhaft kann es angesehen werden, wenn der E-Modul sämtlicher Gummiwerkstoffe in den vorstehend angegebenen Bereichen liegt, die vorstehend für die jeweiligen Gummiwerkstoffe angegeben sind.

Es kann als großer Vorteil des erfindungsgemäßen mehrlagigen Laufstreifens gesehen werden, dass die Gummiwerkstoffe in den Lagen und Bereichen prinzipiell auch mit weiteren Materialien kombiniert werden können, um die Eigenschaften noch spezifischer an die jeweiligen Anforderungen anzupassen. Es ist für den Fachmann im Bereich der Reifenfertigung jedoch unmittelbar ersichtlich, dass es explizit bevorzugt ist, wenn die jeweiligen Lagen und Bereich, bevorzugt sämtliche Lagen und Bereiche, im Wesentlichen aus den jeweiligen Gummiwerkstoffen bestehen, sodass die Eigenschaften der entsprechenden Teile des mehrlagigen Laufstreifens durch die Eigenschaften der Gummiwerkstoffe dominiert werden. Bevorzugt ist entsprechend ein erfindungsgemäßer mehrlagiger Laufstreifen, wobei der Massenanteil des ersten Gummiwerkstoffs in der Grundlage 90 % oder mehr, bevorzugt 95 % oder mehr, besonders bevorzugt 99 % oder mehr, ganz besonders bevorzugt 99,5 % oder mehr, beträgt, bezogen auf die Masse der Grundlage, und/oder wobei der Massenanteil des zweiten Gummiwerkstoffs im ersten Seitenbereich 90 % oder mehr, bevorzugt 95 % oder mehr, besonders bevorzugt 99 % oder mehr, ganz besonders bevorzugt 99,5 % oder mehr, beträgt, bezogen auf die Masse des ersten Seitenbereichs, und/oder wobei der Massenanteil des dritten Gummiwerkstoffs im zweiten Seitenbereich 90 % oder mehr, bevorzugt 95 % oder mehr, besonders bevorzugt 99 % oder mehr, ganz besonders bevorzugt 99,5 % oder mehr, beträgt, bezogen auf die Masse des zweiten Seitenbereichs, und/oder wobei der Massenanteil des vierten Gummiwerkstoffs im Mittelbereich 90 % oder mehr, bevorzugt 95 % oder mehr, besonders bevorzugt 99 % oder mehr, ganz besonders bevorzugt 99,5 % oder mehr, beträgt, bezogen auf die Masse des Mittelbereichs. Insoweit ist es explizit bevorzugt, wenn die Grundlage frei von Festigkeitsträgern ist.

Neben dem E-Modul haben die Erfinder der vorliegenden Erfindung erkannt, dass es zu besonders vorteilhaften Ausgestaltungen führt, wenn auch die Härte der verschiedenen Gummiwerkstoffe spezifisch eingestellt wird. Hierbei hat es sich als besonders vorteilhaft erwiesen, wenn der in der Grundlage und im Mittelbereich eingesetzte Gummiwerkstoff deutlich härter ist als die in den Seitenbereich eingesetzten Gummiwerkstoffe, wobei die Erfinder auch hierfür geeignete absolute Härten identifizieren konnten. Bevorzugt ist nämlich ein erfindungsgemäßer mehrlagiger Laufstreifen, wobei der erste Gummiwerkstoff und/oder der vierte Gummiwerkstoff eine größere Shore A Härte aufweist, als der zweite Gummiwerkstoff und der dritte Gummiwerkstoff, wobei die Shore A Härte des ersten Gummiwerkstoffs und/oder des vierten Gummiwerkstoffs bevorzugt im Bereich von 70 bis 80 liegt, wobei die Shore A Härte des zweiten Gummiwerkstoffs und/oder des dritten Gummiwerkstoffs bevorzugt im Bereich von 60 bis 69 liegt. Hierbei wird die Shore A Härte bei Raumtemperatur gemäß der DIN ISO 7697-1-2018-07 bestimmt.

Nach Einschätzung der Erfinder ist es grundsätzlich möglich, dass die Decklage beispielsweise ausschließlich über den Mittelbereich mit der Grundlage verbunden ist, sodass die zwei Seitenbereiche links und rechts des Mittelbereichs auf dem Mittelbereich aufliegen und selbst keinen unmittelbaren Kontakt zu der Grundlage haben, weil beispielsweise ein dünner Teil des Mittelbereichs dazwischenliegt. Nach Einschätzung der Erfinder sind jedoch explizit solche Ausgestaltungen bevorzugt, in denen sämtliche Bereiche der Decklage unmittelbar mit der Grundlage in Kontakt und mit dieser entsprechend verbunden sind. Bevorzugt ist daher ein erfindungsgemäßer mehrlagiger Laufstreifen, wobei der erste Seitenbereich, der zweite Seitenbereich und der Mittelbereich mit der Grundlage verbunden sind.

Auch wenn es prinzipiell möglich ist, die Verbindung zwischen der Grundlage und der Decklage auf verschiedene Weisen herzustellen, ist es explizit bevorzugt, wenn es sich um eine stoffschlüssige Verbindung zwischen den Lagen handelt, insbesondere, weil eine solche durch einen Vulkanisationsprozess besonders effizient hergestellt werden kann. Bevorzugt ist somit ein erfindungsgemäßer mehrlagiger Laufstreifen, wobei die Grundlage mit der Decklage, bevorzugt mit sämtlichen Bereichen der Decklage, im Kontaktbereich durch eine stoffschlüssige Verbindung verbunden ist, wobei die stoffschlüssige Verbindung bevorzugt durch einen Vulkanisationsprozess erzeugt oder befördert wurde.

Es hat sich als besonders vorteilhaft erwiesen, wenn der Übergang zwischen der Grundlage und der Decklage möglichst nahtlos erfolgt, d. h. dass keine der Lagen über die andere Lage hinausragt. Hierdurch wird vermieden, dass sich Angriffspunkte für ein mechanisches Auftrennen des Verbundes ergeben, sodass besonders haltbare mehrlagige Laufstreifen erhalten werden können. Bevorzugt ist daher ein erfindungsgemäßer mehrlagiger Laufstreifen, wobei die Grundlage und die Decklage, bevorzugt sämtliche Bereiche der Decklage zusammengenommen, auf der jeweils anderen Lage zugewandten Seite im Wesentlichen die gleichen Abmessungen der Oberfläche aufweisen.

Es kann als Vorteil des erfindungsgemäßen mehrlagigen Laufstreifens gesehen werden, dass dieser für die Ausgestaltung des Kontaktbereichs zwischen den Lagen relativ flexibel ist und die vorteilhaften Eigenschaften bei der Lösung des Zielkonflikts nicht zwangsläufig erfordern, dass zwischen beiden Lagen ein ebener Kontaktbereich entsteht, auch wenn dies für bestimmte Anwendungen bevorzugt sein kann. Bevorzugt ist insoweit ein erfindungsgemäßer mehrlagiger Laufstreifen, wobei die Decklage, bevorzugt sämtliche Bereiche der Decklage, eine wellenförmige oder eine im Wesentlichen ebene Kontaktfläche, bevorzugt eine wellenförmige Kontaktfläche, mit der Grundlage aufweisen.

Nach Einschätzung der Erfinder ist es besonders bevorzugt, wenn die unterliegende Grundlage nicht lediglich im Wesentlichen planar ausgebildet ist, sondern wenn diese eine Art "Nase" aufweist, die sich als Materialvorsprung auf der der Decklage zugewandten Seite erhebt, wobei es bei den regelmäßig band- oder ringförmigen Laufstreifen selbstverständlich bevorzugt ist, wenn sich eine entsprechende Erhebung im Wesentlichen über die gesamte Länge des Laufstreifens erstreckt, sodass im Falle eines ringförmigen Laufstreifens, wie er beispielsweise bei der Ausformung auf einem Fahrzeugreifen auftritt, ein umlaufender Materialvorsprung gebildet wird. Ein entsprechender Materialvorsprung kann beim Einsatz von nicht-leitenden Decklagen vorteilhafterweise der elektrostatischen Entladung dienen. Bevorzugt ist ein erfindungsgemäßer mehrlagiger Laufstreifen, wobei die Grundlage auf der der Decklage zugewandten Seite einen oder mehrere Materialvorsprünge aufweist, bevorzugt über die gesamte Länge des Laufstreifens. In einer besonders bevorzugten Ausführungsform liegt der ausgebildete Materialvorsprung im Wesentlichen in der Mitte der Oberfläche der Grundlage.

Im Lichte der vorstehenden Ausführungen ist es ganz besonders bevorzugt, wenn ein wie vorstehend beschriebener Materialvorsprung sich derart durch die gesamte Decklage hindurch erstreckt, dass der Mittelbereich dieser Decklage durch den Materialvorsprung ganz oder teilweise in zwei Teile geteilt wird, wobei der Mittelbereich dann in einen ersten Mittelteil und einen zweiten Mittelteil getrennt wird, die jeweils mit dem Materialvorsprung verbunden sein können. Insbesondere wenn der Materialvorsprung aus dem gleichen Material ausgebildet ist wie die Grundlage bzw. aus einem weiteren Gummiwerkstoff mit einer vergleichbaren Härte und einem vergleichbaren E-Modul ausgebildet wird, ergibt sich im zentralen Bereich des mehrlagigen Laufstreifens ein besonders günstiges Verbundmaterial, welches über eine besonders hohe Profilstabilität verfügt und besonders vorteilhafte Handhabungseigenschaften ausweist. Bevorzugt ist somit ein erfindungsgemäßer mehrlagiger Laufstreifen, wobei die Grundlage auf der der Decklage zugewandten Seite einen sich über die gesamte Länge des Laufstreifens erstreckenden Materialvorsprung aufweist, wobei der Mittelbereich zweiteilig ausgeführt ist und einen ersten Mittelteil und einen zweiten Mittelteil umfasst, wobei der erste Mittelteil und der zweite Mittelteil auf unterschiedlichen Seiten des Materialvorsprungs angeordnet sind, wobei der Materialvorsprung an den Flanken bevorzugt stoffschlüssig mit dem ersten Mittelteil und dem zweiten Mittelteil verbunden ist, wobei die Dicke der Decklage bevorzugt nicht größer als die Höhe des Materialvorsprungs ist.

Prinzipiell ist es denkbar, sämtliche Teilbereiche der Decklage lediglich durch eine Verbindung zu der Grundlage am mehrlagigen Laufstreifen zu fixieren. Nach Einschätzung der Erfinder ist es jedoch für die größte Zahl von Anwendungen vorteilhaft, auch die Teilbereiche der Decklage untereinander zu verbinden, wobei eine stoffschlüssige Verbindung, insbesondere eine Verbindung, wie sie Vulkanisation erzeugt werden kann, bevorzugt ist. Bevorzugt ist somit ein erfindungsgemäßer mehrlagiger Laufstreifen, wobei der Mittelbereich mit dem ersten Seitenbereich und dem zweiten Seitenbereich durch eine stoffschlüssige Verbindung verbunden ist, wobei die stoffschlüssige Verbindung bevorzugt durch einen Vulkanisationsprozess erzeugt oder befördert wurde.

Nach Einschätzung der Erfinder ist es besonders vorteilhaft, wenn die Teilbereiche der Decklage nicht überlappend ausgebildet werden, wobei es sich mit Blick auf die Haltbarkeit als besonders günstig erwiesen hat, wenn relativ zur unterliegenden Grundlage schräge Kontaktflächen eingestellt werden. Bevorzugt ist ein erfindungsgemäßer mehrlagiger Laufstreifen, wobei der Mittelbereich und der erste Seitenbereich im Kontaktbereich auf Stoß liegen, wobei die Kontaktfläche im Kontaktbereich besonders bevorzugt nicht orthogonal zur Oberfläche der Grundlage steht, und/oder wobei der Mittelbereich und der zweite Seitenbereich im Kontaktbereich auf Stoß liegen, wobei die Kontaktfläche im Kontaktbereich besonders bevorzugt nicht orthogonal zur Oberfläche der Grundlage steht.

Auch wenn die erfindungsgemäßen mehrlagigen Laufstreifen nach Einschätzung der Erfinder prinzipiell auch bei profillosen Reifen gute Eigenschaften aufweisen können, zeigen sich die Vorteile der erfindungsgemäßen mehrlagigen Laufstreifen doch insbesondere dann, wenn eine profilierte Oberfläche vorgesehen wird, sodass die Vorteile bei der erhöhten Profilstabilität zum Tragen kommen. Bevorzugt ist ein erfindungsgemäßer mehrlagiger Laufstreifen, wobei der mehrlagige Laufstreifen auf der Seite der Decklage eine profilierte Oberfläche aufweist, wobei die profilierte Oberfläche bevorzugt eine asymmetrische Profilierung aufweist, und/oder wobei die profilierte Oberfläche bevorzugt zumindest drei Profilrillen aufweist, besonders bevorzugt genau drei.

Es kann als besonderer Vorteil der erfindungsgemäßen mehrlagigen Laufstreifen gesehen werden, dass diese hinsichtlich der Positionierung der Kontaktbereiche relativ zum Profil sehr flexibel sind. Durch die stabilisierende Wirkung der unterliegenden Grundlage ist es hierdurch insbesondere möglich, Kontaktbereiche zwischen einem Seitenbereich und dem Mittelbereich auch im Bereich einer Profilrille, insbesondere am Boden einer Profilrille vorzusehen, ohne die Gesamthaltbarkeit des Verbundes negativ zu beeinflussen. Nach Einschätzung der Erfinder der vorliegenden Erfindung ist es sogar insbesondere bevorzugt, wenn zumindest einer der Kontaktbereiche zwischen einem Seitenbereich und dem Mittelbereich am Boden einer Profilrille liegt, wohingegen der andere Kontaktbereich im Bereich einer Profilerhebung liegen sollte, d. h. in einem Bereich der Oberfläche, in dem keine Profilrille vorgesehen ist. Bevorzugt ist demgemäß ein erfindungsgemäßer mehrlagiger Laufstreifen, wobei der Kontaktbereich zwischen dem Mittelbereich und dem ersten Seitenbereich im Bereich einer Profilrille und/oder einer Profilerhebung, bevorzugt im Bereich einer Profilrille, bevorzugt am Boden einer Profilrille, liegt, und/oder wobei der Kontaktbereich zwischen dem Mittelbereich und dem zweiten Seitenbereich im Bereich einer Profilrille und/oder einer Profilerhebung, bevorzugt im Bereich einer Profilerhebung, liegt.

Nach Einschätzung der Erfinder wären grundsätzlich auch mit solchen Grundlagen, die eine relativ hohe Dicke aufweisen, vorteilhafte Fahreigenschaften zu erhalten, insbesondere da eine besonders dicke Grundlage aus einem steifen Gummiwerkstoff eine besonders hohe Stabilität verspricht. Allerdings ist zu berücksichtigen, dass eine besonders dicke zusätzliche Lage mit einer Erhöhung des Gesamtgewichts einhergeht, was regelmäßig als nachteilig empfunden wird. Insoweit ist es nach Einschätzung der Erfinder ein besonderer Vorteil, dass zur Ausbildung eines positiven Effektes auf die Gesamthandhabungseigenschaften und zur Lösung des Zielkonflikts bereits vergleichsweise dünne Grundlagen ausreichend sind und es überraschenderweise möglich ist, mit relativ dünnen Grundlagen auch relativ dicke Decklagen zu stabilisieren. Bevorzugt ist daher ein erfindungsgemäßer mehrlagiger Laufstreifen nach einem der Ansprüche 1 bis 21, wobei die mittlere Dicke der Decklage um 100 % oder mehr, bevorzugt um 200 % oder mehr, besonders bevorzugt um 300 % oder mehr, ganz besonders bevorzugt um 400 % oder mehr, größer ist als die mittlere Dicke der Grundlage.

Grundsätzlich ist es möglich, die Anteile der Teilbereiche in der Decklage flexibel an die jeweiligen Erfordernisse der Anwendung anzupassen, solange zumindest drei Teilbereiche vorgesehen werden. Um einen möglichst ausgeprägten Effekt zu erhalten, ist es nach Einschätzung der Erfinder jedoch zielführend, keinen der Teilbereiche zu klein auszuführen, wobei besonders vorteilhafte Ausgestaltungen dann erhalten werden, wenn der Mittelbereich größer gewählt wird als die Seitenbereiche. Bevorzugt ist entsprechend ein erfindungsgemäßer mehrlagiger Laufstreifen, wobei das Volumenverhältnis des Mittelbereichs zum ersten Seitenbereich im Bereich von 1 bis 10, bevorzugt im Bereich von 1,3 bis 8, besonders bevorzugt im Bereich von 1,6 bis 6, ganz besonders bevorzugt im Bereich von 1,9 bis 4, liegt, und/oder wobei das Volumenverhältnis des Mittelbereichs zum zweiten Seitenbereich im Bereich von 1 bis 10, bevorzugt im Bereich von 1,15 bis 8, besonders bevorzugt im Bereich von 1,3 bis 6, ganz besonders bevorzugt im Bereich von 1,45 bis 4, liegt, und/oder wobei das Volumen des eines Seitenbereichs kleiner ist als das Volumen des anderen Seitenbereichs. Da es sich bei erfindungsgemäßen mehrlagigen Laufstreifen um dreidimensionale Objekte handelt, die insbesondere band- oder ringförmig geformt sein können, entspricht die vorstehende Angabe über die Volumenverhältnisse den Erwartungen des Fachmanns. Da entsprechende mehrlagige Laufstreifen regelmäßig eine hohe Symmetrie aufweisen und entlang der gesamten Länge bzw. des gesamten Reifenumfangs regelmäßig im Wesentlichen gleichförmig ausgebildet sind, können die vorstehenden Volumenverhältnisse auch als Indikatoren für die Flächenverhältnisse der Flächen der verschiedenen Lagen und Bereiche im Querschnitt durch den mehrlagigen Laufstreifen angesehen werden.

Im Lichte der vorstehenden Ausführungen ist es für den Fachmann klar, dass der Hauptanwendungszweck für erfindungsgemäße mehrlagige Laufstreifen der Einsatz als Bestandteil eines Fahrzeugreifens ist. Der Einsatz entsprechender mehrlagiger Laufstreifen als Laufstreifen von Fahrzeugreifen resultiert in solchen Fahrzeugreifen, die über ausgezeichnete Handhabungseigenschaften verfügen, wobei insbesondere das Rollverhalten bei Kurvenfahrten gegenüber anderen Aufbauten von Laufstreifen verbessert ist. Vorteilhafterweise weisen entsprechende mehrlagige Laufstreifen jedoch auch einen relativ niedrigeren Rollwiderstand auf, was beispielsweise mit Blick auf den Kraftstoffverbrauch besonders günstig ist. Vor diesem Hintergrund ist klar, dass die vorliegende Erfindung auch die Verwendung eines erfindungsgemäßen mehrlagigen Laufstreifens in einem Fahrzeugreifen sowie einen entsprechenden Fahrzeugreifen betrifft.

Die Erfindung betrifft somit zudem die Verwendung eines erfindungsgemäßen mehrlagigen Laufstreifens als Laufstreifen eines Fahrzeugreifens, insbesondere eines Fahrzeugluftreifens, zur Verbesserung des Rollverhaltens bei Kurvenfahrten.

Die Erfindung betrifft somit auch einen Fahrzeugreifen, insbesondere Fahrzeugluftreifen, umfassend einen erfindungsgemäßen mehrlagigen Laufstreifen als Laufstreifen.

Bei dem erfindungsgemäßen Fahrzeugreifen, welcher einen erfindungsgemäßen mehrlagigen Laufstreifen als Laufstreifen umfasst, ist es besonders vorteilhaft, wenn dieser derart ausgeführt wird, dass die Seitenwände des Fahrzeugreifens, die während der Fertigung beispielsweise auf einer Reifenaufbautrommel hochgeschlagen werden können, im Randbereich des erfindungsgemäßen mehrlagigen Laufstreifens über diesen überlappen, da hierdurch der erfindungsgemäße mehrlagige Laufstreifen besonders gut in den Gesamtverbund des Fahrzeugreifens integriert wird (sog. "sidewall over tread"). Bevorzugt ist demnach ein erfindungsgemäßer Fahrzeugreifen, wobei der mehrlagige Laufstreifen auf beiden Seiten im Randbereich von der Seitenwand des Fahrzeugreifens überlagert wird.

Es kann als großer Vorteil des erfindungsgemäßen mehrlagigen Laufstreifens gesehen werden, dass dieser besonders effizient und ohne die Notwendigkeit von ausgefeilten Fertigungstechniken hergestellt werden kann. Insbesondere kann ein erfindungsgemäßer mehrlagiger Laufstreifen durch Koextrusion oder durch Bandwicklung und anschließende Vulkanisation hergestellt werden. Offenbart wird somit ebenfalls ein Verfahren zur Herstellung eines erfindungsgemäßen mehrlagigen Laufstreifens, umfassend einen der Schritte:
v1a) Ausformen der Grundlage und der Decklage durch Koextrusion einer ersten vulkanisierbaren Kautschukmischung, einer zweiten vulkanisierbaren Kautschukmischung, einer dritten vulkanisierbaren Kautschukmischung, einer vierten vulkanisierbaren Kautschukmischung und optional weiteren vulkanisierbaren Kautschukmischungen zum Erhalt eines unvulkanisierten Laufstreifenrohlings, oder
v1b) Ausformen der Grundlage und der Decklage durch Bandwicklung eines ersten bandförmigen Materials, umfassend eine erste vulkanisierbare Kautschukmischung, eines zweiten bandförmigen Materials, umfassend eine zweite vulkanisierbare Kautschukmischung, eines dritten bandförmigen Materials, umfassend eine dritte vulkanisierbare Kautschukmischung, eines vierten bandförmigen Materials, umfassend eine vierte vulkanisierbare Kautschukmischung und optional weiterer bandförmiger Materialien, umfassend jeweils weitere vulkanisierbare Kautschukmischungen zum Erhalt eines unvulkanisierten Laufstreifenrohlings.
   sowie den Schritt.
v3) Vulkanisieren des unvulkanisierten Laufstreifenrohlings.

Ausgehend von dem vorstehend offenbarten Verfahren ist es auch möglich, Fahrzeugreifen herzustellen, wenn der unvulkanisierte Laufstreifenrohling vor dem Vulkanisieren als Teil eines Fahrzeugreifenrohlings verarbeitet wird. Offenbart wird somit abschließend ein Verfahren zur Herstellung eines Fahrzeugreifens, insbesondere eines Fahrzeugluftreifens, umfassend die Schritte des offenbarten Verfahrens zur Herstellung eines mehrlagigen Laufstreifens, sowie vor Schritt v3) den Schritt:
v2) Herstellen eines Fahrzeugreifenrohlings umfassend den unvulkanisierten Laufstreifenrohling.

Nachfolgend werden bevorzugte Ausführungsformen der Erfindung unter Bezugnahme auf die beiliegende Zeichnung näher erläutert und beschrieben. Dabei zeigt:

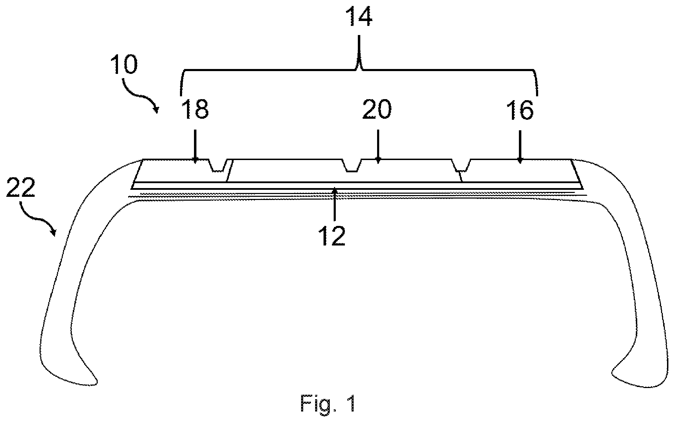

- Fig. 1: eine schematische Querschnittsdarstellung eines erfindungsgemäßen Fahrzeugreifens mit einem erfindungsgemäßen mehrlagigen Laufstreifen.

Fig. 1 zeigt eine schematische Querschnittsdarstellung eines erfindungsgemäßen Fahrzeugreifens 22, welcher als Fahrzeugluftreifen ausgeführt ist. Der Fahrzeugreifen 22 umfasst als Laufstreifen einen erfindungsgemäßen mehrlagigen Laufstreifen 10 in einer bevorzugten Ausführungsform. In der Darstellung der Fig. 1 ist der erfindungsgemäße mehrlagige Laufstreifen 10 durch die teilweise überlappenden Seitenwände des Fahrzeugreifens 22 stabilisiert, wobei durch die unter dem Laufstreifen eingezeichneten Linien schematisch angedeutet wird, dass der Laufstreifen auf Spulbandagen und Gürtellagen bzw. auf einer Karkasse angeordnet ist, wie es in modernen Radialreifen üblich ist.

Der mehrlagige Laufstreifen 10 der Fig. 1 besteht aus einer Grundlage 12, die wiederum aus einem ersten Gummiwerkstoff besteht, welcher durch Vulkanisation einer vernetzbaren Kautschukmischung erhalten wurde. Auf der Grundlage ist eine Decklage 14 angeordnet. Die Decklage 14 besteht aus einem ersten Seitenbereich 16, einem zweiten Seitenbereich 18 und einem Mittelbereich 20, die jeweils auf der Grundlage 12 angeordnet und mit dieser stoffschlüssig verbunden sind. Der erste Seitenbereich 16 besteht aus einem zweiten Gummiwerkstoff, der zweite Seitenbereich 18 besteht aus einem dritten Gummiwerkstoff und der Mittelbereich 20 besteht aus einem vierten Gummiwerkstoff.

In dem in Fig. 1 gezeigten bevorzugten Ausführungsbeispiel weist der erste Gummiwerkstoff, d. h. der Gummiwerkstoff der Grundlage einen E-Modul von 13 MPa und eine Shore A Härte von 70 auf. Der vierte Gummiwerkstoff, d. h. der Gummiwerkstoff des Mittelbereichs 20 weist einen E-Modul von 12 MPa und eine Shore A Härte von 74 auf. In der gezeigten bevorzugten Ausführungsform bestehen der erste Seitenbereich 16 und der zweite Seitenbereich 18 aus dem gleichen Gummiwerkstoff, sodass beide Seitenbereiche einen E-Modul von 8 MPa und eine Shore A Härte von 65 aufweisen. Der E-Modul und die Shore A Härte werden dabei jeweils wie vorstehend erläutert bestimmt.

Der mehrlagige Laufstreifen 10 umfasst auf der Seite der Decklage 14 eine profilierte Oberfläche mit drei Profilrillen. Der Kontaktbereich zwischen dem Mittelbereich 20 und dem ersten Seitenbereich 16 liegt hierbei am Boden einer Profilrille, wohingegen der Kontaktbereich zwischen dem Mittelbereich 20 und dem Seitenbereich 18 im Bereich einer Profilerhebung liegt. Beide Kontaktbereiche zwischen den Seitenbereichen und dem Mittelbereich 20 bilden eine Kontaktfläche, die schräg zur Oberfläche der unterliegenden Grundlage 12 steht. In dem in Fig. 1 gezeigten Beispiel ist die mittlere Dicke der Decklage 14 um mehr als 200 % größer als die der Grundlage 12.

Das Volumen des Mittelbereichs 20 ist etwa doppelt so groß wie das Volumen der Seitenbereiche, was im gezeigten schematischen Querschnitt anhand der Querschnittsflächen abgeschätzt werden kann. Hierbei ist das Volumen des zweiten Seitenbereichs 18 etwas kleiner als das Volumen des Seitenbereichs 16.

Der in Fig. 1 gezeigte erfindungsgemäße mehrlagige Laufstreifen 10 kann durch Koextrusion der entsprechenden vulkanisierbaren Kautschukmischung und anschließende Vulkanisation erhalten werden, wobei die einzelnen Lagen und Teilbereiche alternativ durch eine Bandwicklung der einzelnen Komponenten ausgeformt werden können. Der erfindungsgemäße Fahrzeugreifen 22 ist durch Vulkanisation aus einem Fahrzeugreifenrohling zu erhalten, der den unvulkanisierten Laufstreifenrohling umfasst.

Für einen Fahrzeugreifen 22 mit einem erfindungsgemäßen Laufstreifen 10 wurde der "Cornering Coefficient" (CC) bei einer Last von 5000 N bestimmt, der als Maßstab für die Handhabungseigenschaften gesehen werden kann. Diese Bestimmung erfolgt dabei mit Hilfe einer üblichen Testanlage zur Bestimmung von Kräften und Momenten an Reifen. Für einen erfindungsgemäßen Laufstreifen 10 wurde ein CC-Wert erhalten, der 11 % über dem Wert eines als Vergleichs fungierenden Fahrzeugreifens mit einem einkomponentigen Laufstreifen, dessen Gummiwerkstoff einen E-Modul von 9 MPa und eine Shore A Härte von 67 aufweist, liegt, wodurch die hohe Leistungsfähigkeit der erfindungsgemäßen Laufstreifen 10 deutlich wird. Darüber hinaus erzielte der Reifen einen um 8% geringeren Rollwiderstand (Testmethode nach ISO 28580).

### Bezugszeichenliste

- 10: Mehrlagiger Laufstreifen
- 12: Grundlage
- 14: Decklage
- 16: Erster Seitenbereich
- 18: Zweiter Seitenbereich
- 20: Mittelbereich
- 22: Fahrzeugreifen

## Patentansprüche

1. Mehrlagiger Laufstreifen (10) für den Einsatz in Fahrzeugreifen, umfassend:
a) eine Grundlage (12), umfassend einen ersten Gummiwerkstoff, und
b) eine auf der Grundlage (12) angeordnete und mit der Grundlage verbundene Decklage (14),
wobei die Decklage (14) umfasst:
i) einen ersten Seitenbereich (16), umfassend einen zweiten Gummiwerkstoff,
ii) einen zweiten Seitenbereich (18), umfassend einen dritten Gummiwerkstoff, und
iii) einen zwischen dem ersten Seitenbereich (16) und dem zweiten Seitenbereich (18) angeordneten Mittelbereich (20), umfassend einen vierten Gummiwerkstoff,
wobei der erste Gummiwerkstoff einen höheren E-Modul aufweist als der vierte Gummiwerkstoff,
**dadurch gekennzeichnet, dass**
der vierte Gummiwerkstoff einen höheren E-Modul aufweist als der zweite Gummiwerkstoff und der dritte Gummiwerkstoff.

2. Mehrlagiger Laufstreifen (10) nach Anspruch 1, wobei der Quotient des E-Modul des ersten Gummiwerkstoffs geteilt durch den E-Modul des vierten Gummiwerkstoffs im Bereich von 1,01 bis 1,2, bevorzugt im Bereich von 1,02 bis 1,15, liegt
und/oder
wobei der Quotient des E-Modul des vierten Gummiwerkstoffs geteilt durch den E-Modul des zweiten Gummiwerkstoffs im Bereich von 1,1 bis 2,3, bevorzugt im Bereich von 1,3 bis 2,0, liegt,
und/oder
wobei der Quotient des E-Modul des vierten Gummiwerkstoffs geteilt durch den E-Modul des dritten Gummiwerkstoffs im Bereich von 1,1 bis 2,3, bevorzugt im Bereich von 1,3 bis 2,0, liegt.

3. Mehrlagiger Laufstreifen (10) nach einem der Ansprüche 1 oder 2, wobei der E-Modul des ersten Gummiwerkstoffs im Bereich von 12 bis 17 MPa, bevorzugt im Bereich von 13 bis 16 MPa, liegt,
und/oder
wobei der E-Modul des zweiten Gummiwerkstoffs im Bereich von 6 bis 11 MPa, bevorzugt im Bereich von 7 bis 10 MPa, liegt,
und/oder
wobei der E-Modul des dritten Gummiwerkstoffs im Bereich von 6 bis 11 MPa, bevorzugt im Bereich von 7 bis 10 MPa, liegt,
und/oder
wobei der E-Modul des vierten Gummiwerkstoffs im Bereich von 11 bis 16 MPa, bevorzugt im Bereich von 12 bis 15 MPa, liegt.

4. Mehrlagiger Laufstreifen (10) nach einem der Ansprüche 1 bis 3, wobei der erste Gummiwerkstoff und/oder der vierte Gummiwerkstoff eine größere Shore A Härte aufweist, als der zweite Gummiwerkstoff und der Dritte Gummiwerkstoff, wobei die Shore A Härte des ersten Gummiwerkstoffs und/oder des vierten Gummiwerkstoffs bevorzugt im Bereich von 70 bis 80 liegt, wobei die Shore A Härte des zweiten Gummiwerkstoffs und/oder des dritten Gummiwerkstoffs bevorzugt im Bereich von 60 bis 69 liegt.

5. Mehrlagiger Laufstreifen (10) nach einem der Ansprüche 1 bis 4, wobei die Grundlage (12) auf der der Decklage (14) zugewandten Seite einen sich über die gesamte Länge des Laufstreifens erstreckenden Materialvorsprung aufweist, wobei der Mittelbereich (20) zweiteilig ausgeführt ist und einen ersten Mittelteil und einen zweiten Mittelteil umfasst, wobei der erste Mittelteil und der zweite Mittelteil auf unterschiedlichen Seiten des Materialvorsprungs angeordnet sind, wobei der Materialvorsprung an den Flanken bevorzugt stoffschlüssig mit dem ersten Mittelteil und dem zweiten Mittelteil verbunden ist, wobei die Dicke der Decklage (14) bevorzugt nicht größer als die Höhe des Materialvorsprungs ist.

6. Mehrlagiger Laufstreifen (10) nach einem der Ansprüche 1 bis 5, wobei der mehrlagige Laufstreifen (10) auf der Seite der Decklage (14) eine profilierte Oberfläche aufweist, wobei die profilierte Oberfläche bevorzugt eine asymmetrische Profilierung aufweist, und/oder wobei die profilierte Oberfläche bevorzugt zumindest drei Profilrillen aufweist, besonders bevorzugt genau drei.

7. Mehrlagiger Laufstreifen (10) nach Anspruch 6, wobei ein Kontaktbereich zwischen dem Mittelbereich (20) und dem ersten Seitenbereich (16) im Bereich einer Profilrille und/oder einer Profilerhebung, bevorzugt im Bereich einer Profilrille, bevorzugt am Boden einer Profilrille, liegt,
und/oder
wobei der Kontaktbereich zwischen dem Mittelbereich (20) und dem zweiten Seitenbereich (18) im Bereich einer Profilrille und/oder einer Profilerhebung, bevorzugt im Bereich einer Profilerhebung, liegt.

8. Mehrlagiger Laufstreifen (10) nach einem der Ansprüche 1 bis 7, wobei die mittlere Dicke der Decklage (14) um 100 % oder mehr, bevorzugt um 200 % oder mehr, besonders bevorzugt um 300 % oder mehr, ganz besonders bevorzugt um 400 % oder mehr, größer ist als die mittlere Dicke der Grundlage (12).

9. Verwendung eines mehrlagigen Laufstreifens (10) nach einem der Ansprüche 1 bis 8 als Laufstreifen eines Fahrzeugreifens (22), insbesondere eines Fahrzeugluftreifens.

10. Fahrzeugreifen (22), insbesondere Fahrzeugluftreifen, der Fahrzeugreifen (22) umfassend einen mehrlagigen Laufstreifen (10) nach einem der Ansprüche 1 bis 8 als Laufstreifen.

## Claims

1. Multi-layer tread (10) for use in vehicle tyres, comprising:
a) a base layer (12) comprising a first rubber material, and
b) a top layer (14) arranged on the base layer (12) and connected to the base layer,
wherein the top layer (14) comprises:
i) a first side region (16) comprising a second rubber material,
ii) a second side region (18) comprising a third rubber material, and
iii) a central region (20) arranged between the first side region (16) and the second side region (18) and comprising a fourth rubber material,
wherein the first rubber material has a higher modulus of elasticity than the fourth rubber material,
**characterized in that**
the fourth rubber material has a higher modulus of elasticity than the second rubber material and the third rubber material.

2. Multi-layer tread (10) according to Claim 1, wherein the quotient of the modulus of elasticity of the first rubber material divided by the modulus of elasticity of the fourth rubber material is in the range of from 1.01 to 1.2, preferably in the range of from 1.02 to 1.15
and/or
wherein the quotient of the modulus of elasticity of the fourth rubber material divided by the modulus of elasticity of the second rubber material is in the range of from 1.1 to 2.3, preferably in the range of from 1.3 to 2.0,
and/or
wherein the quotient of the modulus of elasticity of the fourth rubber material divided by the modulus of elasticity of the third rubber material is in the range of from 1.1 to 2.3, preferably in the range of from 1.3 to 2.0.

3. Multi-layer tread (10) according to either of Claims 1 or 2, wherein the modulus of elasticity of the first rubber material is in the range of from 12 to 17 MPa, preferably in the range of from 13 to 16 MPa,
and/or
wherein the modulus of elasticity of the second rubber material is in the range of from 6 to 11 MPa, preferably in the range of from 7 to 10 MPa,
and/or
wherein the modulus of elasticity of the third rubber material is in the range of from 6 to 11 MPa, preferably in the range of from 7 to 10 MPa,
and/or
wherein the modulus of elasticity of the fourth rubber material is in the range of from 11 to 16 MPa, preferably in the range of from 12 to 15 MPa.

4. Multi-layer tread (10) according to one of Claims 1 to 3, wherein the first rubber material and/or the fourth rubber material have/has a higher Shore A hardness than the second rubber material and the third rubber material, wherein the Shore A hardness of the first rubber material and/or of the fourth rubber material is preferably in the range of from 70 to 80, wherein the Shore A hardness of the second rubber material and/or of the third rubber material is preferably in the range of from 60 to 69.

5. Multi-layer tread (10) according to one of Claims 1 to 4, wherein the base layer (12) has, on the side facing the top layer (14), a material projection which extends over the entire length of the tread, wherein the central region (20) is of two-part design and comprises a first central part and a second central part, wherein the first central part and the second central part are arranged on different sides of the material projection, wherein the material projection is preferably connected materially at the flanks to the first central part and the second central part, wherein the thickness of the top layer (14) is preferably not greater than the height of the material projection.

6. Multi-layer tread (10) according to one of Claims 1 to 5, wherein the multi-layer tread (10) has a profiled surface on the side of the top layer (14), wherein the profiled surface preferably has asymmetrical profiling, and/or wherein the profiled surface preferably has at least three profile grooves, particularly preferably precisely three.

7. Multi-layer tread (10) according to Claim 6, wherein a contact region between the central region (20) and the first side region (16) is situated in the region of a profile groove and/or a profile elevation, preferably in the region of a profile groove, preferably at the bottom of a profile groove,
and/or
wherein the contact region between the central region (20) and the second side region (18) is situated in the region of a profile groove and/or a profile elevation, preferably in the region of a profile elevation.

8. Multi-layer tread (10) according to one of Claims 1 to 7, wherein the average thickness of the top layer (14) is greater by 100% or more, preferably by 200% or more, particularly preferably by 300% or more, very particularly preferably by 400% or more, than the average thickness of the base layer (12).

9. Use of a multi-layer tread (10) according to one of Claims 1 to 8 as a tread of a vehicle tyre (22), in particular of a pneumatic vehicle tyre.

10. Vehicle tyre (22), in particular pneumatic vehicle tyre, the vehicle tyre (22) comprising a multi-layer tread (10) according to one of Claims 1 to 8 as a tread.

## Revendications

1. Bande de roulement multicouche (10) pour utilisation dans des pneus de véhicules, comprenant :
a) une couche base (12), comprenant un premier matériau de caoutchouc, et
b) une couche de recouvrement (14) agencée sur la couche de base (12) et reliée à la couche de base,
où la couche de recouvrement (14) comprend :
i) une première zone latérale (16), comprenant un deuxième matériau de caoutchouc,
ii) une deuxième zone latérale (18), comprenant un troisième matériau de caoutchouc, et
iii) une zone centrale (20) agencée entre la première zone latérale (16) et la deuxième zone latérale (18), comprenant un quatrième matériau de caoutchouc,
où le premier matériau de caoutchouc présente un module d'élasticité supérieur à celui du quatrième matériau de caoutchouc,
**caractérisée en ce que**
le quatrième matériau de caoutchouc présente un module d'élasticité supérieur à celui du deuxième matériau de caoutchouc et du troisième matériau de caoutchouc.

2. Bande de roulement multicouche (10) selon la revendication 1, où le quotient du module d'élasticité du premier matériau de caoutchouc divisé par le module d'élasticité du quatrième matériau de caoutchouc se situe dans la plage de 1,01 à 1,2, de préférence dans la plage de 1,02 à 1,15
et/ou
où le quotient du module d'élasticité du quatrième matériau de caoutchouc divisé par le module d'élasticité du deuxième matériau de caoutchouc se situe dans la plage de 1,1 à 2,3, de préférence dans la plage de 1,3 à 2,0,
et/ou
où le quotient du module d'élasticité du quatrième matériau de caoutchouc divisé par le module d'élasticité du troisième matériau de caoutchouc se situe dans la plage de 1,1 et 2,3, de préférence dans la plage de 1,3 à 2,0.

3. Bande de roulement multicouche (10) selon l'une quelconque des revendications 1 ou 2, où le module d'élasticité du premier matériau de caoutchouc se situe dans la plage de 12 à 17 MPa, de préférence dans la plage de 13 à 16 MPa,
et/ou
où le module d'élasticité du deuxième matériau de caoutchouc se situe dans la plage de 6 à 11 MPa, de préférence dans la plage de 7 à 10 MPa,
et/ou
où le module d'élasticité du troisième matériau de caoutchouc se situe dans la plage de 6 à 11 MPa, de préférence dans la plage de 7 à 10 MPa,
et/ou
où le module d'élasticité du quatrième matériau de caoutchouc se situe dans la plage de 11 à 16 MPa, de préférence dans la plage de 12 à 15 MPa.

4. Bande de roulement multicouche (10) selon l'une quelconque des revendications 1 à 3, où le premier matériau de caoutchouc et/ou le quatrième matériau de caoutchouc présentent une dureté Shore A supérieure à celle du deuxième matériau de caoutchouc et du troisième matériau de caoutchouc, où la dureté Shore A du premier matériau de caoutchouc et/ou du quatrième matériau de caoutchouc se situe de préférence dans la plage de 70 à 80, où la dureté Shore A du deuxième matériau de caoutchouc et/ou du troisième matériau de caoutchouc se situe de préférence dans la plage de 60 à 69.

5. Bande de roulement multicouche (10) selon l'une quelconque des revendications 1 à 4, où la couche de base (12) présente, sur le côté tourné vers la couche de recouvrement (14), une saillie de matériau s'étendant sur toute la longueur de la bande de roulement, où la zone centrale (20) est réalisée en deux parties et comprend une première partie centrale et une deuxième partie centrale, où la première partie centrale et la deuxième partie centrale sont agencées sur des côtés différents de la saillie de matériau, où la saillie de matériau est de préférence reliée par liaison de matière au niveau des flancs avec la première partie centrale et la deuxième partie centrale, où l'épaisseur de la couche de recouvrement (14) n'est de préférence pas supérieure à la hauteur de la saillie de matériau.

6. Bande de roulement multicouche (10) selon l'une quelconque des revendications 1 à 5, où la bande de roulement multicouche (10) présente une surface profilée sur le côté de la couche de recouvrement (14), où la surface profilée présente de préférence un profilage asymétrique et/ou où la surface profilée présente de préférence au moins trois rainures de profil, de manière particulièrement préférée exactement trois.

7. Bande de roulement multicouche (10) selon la revendication 6, où une zone de contact entre la zone centrale (20) et la première zone latérale (16) se situe dans la zone d'une rainure de profil et/ou d'un relief de profil, de préférence dans la zone d'une rainure de profil, de préférence au fond d'une rainure de profil, et/ou
où la zone de contact entre la zone centrale (20) et la deuxième zone latérale (18) se situe dans la zone d'une rainure de profil et/ou d'un relief de profil, de préférence dans la zone d'un relief de profil.

8. Bande de roulement multicouche (10) selon l'une quelconque des revendications 1 à 7, où l'épaisseur moyenne de la couche de recouvrement (14) est supérieure de 100 % ou plus, de préférence de 200 % ou plus, de manière particulièrement préférée de 300 % ou plus, de manière tout particulièrement préférée de 400 % ou plus, à l'épaisseur moyenne de la couche de base (12).

9. Utilisation d'une bande de roulement multicouche (10) selon l'une quelconque des revendications 1 à 8 en tant que bande de roulement d'un pneu de véhicule (22), notamment d'un pneu à air de véhicule.

10. Pneu de véhicule (22), notamment pneu à air de véhicule, le pneu de véhicule (22) comprenant une bande de roulement multicouche (10) selon l'une quelconque des revendications 1 à 8 en tant que bande de roulement.
